# EUROPÄISCHE PATENTSCHRIFT

(11) **EP 1 310 604 B1**
(45) Veröffentlichungstag und Bekanntmachung des Hinweises auf die Patenterteilung: **28.12.2005**
(21) Anmeldenummer: 02023719.4
(22) Anmeldetag: 23.10.2002
(51) Int. Cl.: E03F 5/02, E02D 29/12

(54) **Dränschacht**
Draining chamber
Puits de drainage

(30) Priorität: 13.11.2001 DE 10155683
(43) Veröffentlichungstag der Anmeldung: 14.05.2003
(73) Patentinhaber: Drossbach GmbH & Co. KG, 86641 Rain am Lech (DE)
(72) Erfinder: Hell, Herbert, 86641 Rain am Lech (DE); Winkler, Dietmar, 65191 Wiesbaden (DE)
(74) Vertreter: Altenburg, Udo

(56) Entgegenhaltungen:
- EP-A- 0 358 857
- EP-A- 0 918 111
- DE-U- 29 702 903
- FR-A- 2 790 495
- GB-A- 2 145 444
- GB-A- 2 224 047
- US-B1- 6 189 717

## Beschreibung

Die vorliegende Erfindung betrifft einen Dränschacht mit einem als Wellrohr ausgebildeten Schachtrohr aus Kunststoff, einem das Schachtrohr verschliessenden Boden, sowie zumindest einem Paar radial am Schachtrohr vorgesehenen Anschlussstutzen, an denen jeweils eine Entwässerungsleitung oder dergleichen anschliessbar ist.

Dränschächte mit einem aus Kunststoff bestehenden Schachtrohr in Form eines Wellrohrs, das eine im Schnitt mäanderförmige Wandung, d. h. eine Wandung mit gegensinnig gewölbten Umfangsrillen aufweist, sind bereits in verschiedenen Ausführungen bekannt geworden. Zum Beispiel schlägt die DE 38 29 397 C2 ein solches Schachtrohr vor, wobei im unteren Endbereich des Schachtrohres eine mit Schüttgut befüllbare Kammer vorgesehen sein soll, um dem Schachtrohr bei seinem Einbau in ein Loch im Erdreich einen besseren Stand zu geben. Die Kammer wird nach unten hin von einem Schachtrohrboden begrenzt, der mit Hilfe eines das Schachtrohr und den Rand des Bodens umgreifenden Reifen am Schachtrohr festgeklemmt werden kann.

Die DE 297 02 903 U1 schlägt die Herstellung von Schachtrohren in Form von Wellrohren in einem Corrugater vor. Um radiale Anschlüsse für die Entwässerungsleitungen anbringen zu können, sind in den Formbacken des Corrugaters radial ein- und ausfahrbare Schieber vorgesehen, mit Hilfe derer kurze, radial nur gering überstehende Anschlusswarzen ausgebildet werden können.

Weitere Schächte sind aus US 6,189,717 B1, GB 2 145 444 A und FR 2 790 495 A1 bekannt.

Der vorliegenden Erfindung liegt daher die Aufgabe zugrunde, einen verbesserten Dränschacht der eingangs genannten Art derart weiterzubilden, dass der Dränschacht steifer und belastbarer ist

Diese Aufgabe wird durch einen Dränschacht gemäß Anspruch 1 gelöst. Die abhängigen Ansprüche betreffen vorteilhafte Ausgestaltungen der Erfindung.

Erfindungsgemäss ist vorgesehen, den Boden des Schachtrohrs sowie zwei diametral gegenüberliegende Anschlussstutzen schweissnahtfrei an das Schachtrohr im Extrusionsblasverfahren anzublasen, und am Schachtrohr über seinen Umfang verteilt Längsversteifungsrippen einstückig anzuformen. Anstelle der herkömmlichen Fertigung in einem Corrugater, wird im Extrusionsblasverfahren zunächst ein Schlauch extrudiert, der sodann in ein Blaswerkzeug eingebracht und abgeschnitten wird, sowie schliesslich in dem Blaswerkzeug zu dem Schachtrohr in Form des Wellrohrs geblasen wird, wobei in dem Schritt des Blasens gleichzeitig der Boden sowie die diametral gegenüberliegenden Anschlussstutzen in der gewünschten Form ausgebildet werden. Durch das Blasen des Schachtrohres können die Anschlussstutzen in der gewünschten Form ausgebildet werden, insbesondere können sie in der notwendigen Länge geblasen werden, um eine ausreichende Einstecktiefe zu ermöglichen. Das nachträgliche Anschweissen von Muffenstücken kann bei den gegenüberliegenden Anschlussstutzen entfallen, wodurch die Montage bzw. Herstellung beträchtlich vereinfacht wird, was darüber hinaus auch gleichzeitig durch das integrale Anformen des Bodens unterstützt wird. Zudem kann eine wesentlich verbesserte Festigkeit und Steifigkeit erreicht werden. Potentielle Schwachstellen wie Schweissnähte oder die bekannte Reifenverbindung zwischen Boden und Schachtrohr entfallen.

Außerdem ist erfindungsgemäß vorgesehen, durch Längsversteifungen, welche die Umfangsrillen des Wellrohres durchsetzen de Sicken bilden, eine erhöhte Steifigkeit zu erzielen. Gerade die Kombination der Umfangsrillen des Wellrohres mit den hierzu im wesentlichen senkrecht verlaufenden Längsversteifungsrippen bewirkt eine besonders grosse Verformungssteifigkeit.

Die Längsversteifungen bilden also die Sicken, die die Umfangsrillen des Wellrohres durchsetzen. Von erhabenen Wölbungen des Wellrohrprofils abgeschmolzenes Material bildet den Sickenboden bzw. füllt die gegensinnigen Wölbungen des Wellrohrs, so dass eine in Längsrichtung verlaufende Rippe ausgebildet wird. Vorzugsweise beträgt die Tiefe der Sicke in radialer Richtung nur einen Bruchteil der radialen Erstreckung des Wellrohrprofils, d. h. der Höhe der Umfangsrippen des Wellrohrprofils. Hierdurch bleibt die erhöhte Umfangssteifigkeit, die durch das Wellrohrprofil erreicht wird, weitgehend erhalten. Grundsätzlich können die Längsversteifungen auf beiden Seiten des Schachtrohrs ausgebildet sein. Vorzugsweise sind sie an der Innenumfangsseite des Wellrohrs vorgesehen. In besonders vorteilhafter Weise erstrecken sich die Längsversteifungen in von Anschlussstutzen freien Segmenten des Schachtrohrs. Sie können durchgehend und von den Anschlussstutzen nicht unterbrochen ausgebildet sein und sich über die gesamte Länge des Schachtrohrs erstrecken.

Die Längsversteifungen sind so ausgebildet, dass das Schachtrohr auch im Bereich der Längsversteifungsrippen frei von Durchbrüchen bleibt. Vorzugsweise sind drei symmetrisch über den Umfang verteilte Versteifungen vorgesehen.

Die Anschlussstutzen sind ausreichend groß ausgeblasen, um unmittelbar in die oder auf die Anschlussstutzen ein Rohr einer Entwässerungsleitung oder dergleichen stecken zu können.

Um Rohre mit unterschiedlichen Durchmessern an den Anschlussstutzen anschließen zu können, ist vorzugsweise ein in den Anschlussstutzen oder auf diesen steckbarer Anschlussadapter vorgesehen, der im Durchmesser abgestufte Anschlussabschnitte besitzt. Vorzugsweise sind zwischen den Anschlussabschnitten unterschiedlichen Durchmessers Soll-Trennstellen vorgesehen, so dass die zu kleinen Anschlussabschnitte einfach abgetrennt werden können. Der verbleibende, passende Anschlussabschnitt kann sodann mit dem anzuschließenden Rohr verbunden werden.

In Weiterbildung der Erfindung sind die abgestuften Anschlussabschnitte zueinander derart angeordnet, dass sie einen stufenfreien Sohlenbereich bilden. Der über die abgestuften Anschlussabschnitte hinweggehend stufenfreie Sohlenbereich verhindert Ablagerungen von Schwebstoffen etc. im Anschlussadapter. Das durch den Anschlussadapter strömende Wasser läuft strömungsgünstig ohne Verwirblungen über den Sohlenbereich hinweg.

Um sicherzustellen, dass der Anschlussadapter stets mit dem stufenfreien Sohlenbereich nach unten in den Anschlussstutzen eingesteckt bzw. auf diesen aufgesteckt wird, können die Anschlussstutzen sowie der Anschlussadapter eine Steckcodierung besitzen, die ein Zusammenstecken von Anschlussstutzen und Anschlussadapter in nur einer Drehlage erlauben.

Vorzugsweise sind an den Anschlussstutzen des Schachtrohrs formschlüssig wirkende Arretiermittel vorgesehen. Insbesondere können radial vorspringende, einstückig angeformte Arretiervorsprünge vorgesehen sein, die das jeweils gesteckte Rohr bzw. den gesteckten Anschlussadapter in der zusammengesteckten Stellung hält. Vorzugsweise sind radial nach innen vorspringende Rastnasen vorgesehen, die ein eingestecktes Entwässerungsrohr oder den eingesteckten Anschlussadapter festhalten, indem sie über eine Wulst oder dergleichen hinweg in einen hinterschnittenen Bereich einschnappen.

In Weiterbildung der Erfindung sind die Arretiervorsprünge beim Blasen des Schachtrohres gleich mit angeblasen. Der Anschlussstutzen kann hierdurch auch im Bereich der Arretiervorsprünge frei von Durchbrüchen ausgebildet werden, so dass keine Dichtigkeitsprobleme der Steckverbindung entstehen. Zudem wird eine Schwächung des Anschlussstutzens vermieden, die schlimmstenfalls zu einem Riss oder zum Reißen des Anschlussstutzens führen könnte.

In Weiterbildung der Erfindung können ferner an den Anschlussstutzen Stecktiefenbegrenzer vorgesehen sein. Beim Auf- bzw. Einstecken des anzuschließenden Rohres bzw. des Adapters wird dieses gegen einen Anschlag am Anschlussstutzen geschoben. Vorzugsweise ist als Stecktiefenbegrenzer ein radial vorspringender Anschlag vorgesehen, der frei von Durchbrüchen am jeweiligen Arretierstutzen einstückig angeformt ist.

Gemäß einer vorteilhaften Ausführung der Erfindung besitzt das Schachtrohr drei Anschlussstutzen, die in einer Ebene liegen. Vorzugsweise ist neben den beiden bereits genannten diametral gegenüberliegenden, angeblasenen Anschlussstutzen ein weiterer Anschlussstutzen vorgesehen, der zwischen den beiden zuvor genannten Anschlussstutzen mittig angeordnet ist und sich mit seiner Längsachse senkrecht zu den koaxialen Längsachsen der anderen beiden Anschlussstutzen erstreckt.

Üblicherweise wird das Schachtrohr an seinem oberen Ende mit einem Deckel ver schlossen, der in etwa bündig mit dem umgebenden Erdreich abschließen kann. Der Deckel kann je nach Anwendungsfall unterschiedlich ausgebildet sein. Um eine Befahrbarkeit zu erreichen, kann ein Schachtdeckel mit einem das Schachtrohr einfassenden Betonring vorgesehen sein.

In Weiterbildung der Erfindung ist ein Kunststoffdeckel vorgesehen. Ein solcher Kunststoffdeckel ist vorzugsweise doppelwandig extrusionsgeblasen, wobei die beiden Wandungen des Deckels miteinander verschweißt, insbesondere punktverschweißt sind, um dem Deckel eine erhöhte Steifigkeit zu geben. Das doppelwandige Blasen mit der Verschweißung der beiden Wandungen gibt dem Kunststoffdeckel eine ausreichende Belastbarkeit, so dass er zumindest begehbar ist. Insbesondere wird der Deckel napfförmig geblasen, so dass er mit seinem ringförmigen, ebenfalls doppelwandigen Rand über das obere Ende des Schachtrohrs stülpbar ist.

In Weiterbildung der Erfindung ist der Schachtdeckel mit dem Schachtrohr verrastbar. Am Schachtdeckel bzw. dessen ringförmigem Rand können radial nach innen vorspringende Rastnasen vorgesehen sein, die mit den Umfangsseiten des Wellrohrs verrastbar sind. Vorzugsweise sind die Rastnasen frei von Durchbrüchen an dem Schachtdeckelrand einstückig angeformt. Insbesondere sind die Rastnasen derart geformt, dass sie mit dem gewellten Außenumfangsprofil des wellrohrförmigen Schachtrohrs formschlüssig zusammenwirken. Es kann eine verschiedene Anzahl von Rastnasen über den Umfang verteilt angeformt sein. Gemäß einer bevorzugten Ausführung sind drei gleichmäßig beabstandete Rastnasen vorgesehen. Diese Anzahl bildet einen guten Kompromiss zwischen Montierbarkeit mit noch handhabbarem Kraftaufwand und ausreichender Verrastsicherheit.

Die Erfindung wird nachfolgend anhand eines bevorzugten Ausführungsbeispieles und zugehöriger Zeichnungen näher erläutert. In den Zeichnungen zeigen:
- Fig. 1:: einen Längsschnitt durch das Schachtrohr eines Dränschachtes gemäß einer bevorzugten Ausführung der Erfindung, wobei der Ausschnitt X das Profil der Wellrohrwandung des Schachtrohrs zeigt,
- Fig. 2:: eine Draufsicht auf das Schachtrohr aus Fig. 1, wobei in dem Ausschnitt Z die Kontur der Schachtrohrwandung im Bereich einer Längsversteifungsrippe gezeigt ist,
- Fig. 3:: eine Draufsicht auf einen der gegenüberliegenden Anschlussstutzen des Schachtrohrs aus Fig. 1 in der in Fig. 1 mit Y gekennzeichneten Blickrichtung,
- Fig. 4:: einen Schnitt durch den Anschlussstutzen aus Fig. 3 entlang der darin gezeigten Schnittlinie A-A,
- Fig. 5:: einen Längsschnitt durch ein auf das Schachtrohr aus den Figuren 1 und 2 aufsetzbaren Aufsatzrohres zur Verlängerung des Schachtes,
- Fig. 6:: eine Draufsicht auf einen Schachtdeckel, der auf das Schachtrohr aus den Figuren 1 und 2 oder das Aufsatzrohr aus Fig. 5 aufsetzbar ist,
- Fig. 7:: einen Schnitt durch den Schachtdeckel aus Fig. 6 entlang der darin gezeigten Schnittlinie A-A, und
- Fig. 8:: einen Längsschnitt durch einen Anschlussadapter, der in einen der Anschlussstutzen des Schachtrohres aus Fig. 1 einsteckbar ist und dessen Durchmesser auf einen kleineren Anschlussdurchmesser reduziert.

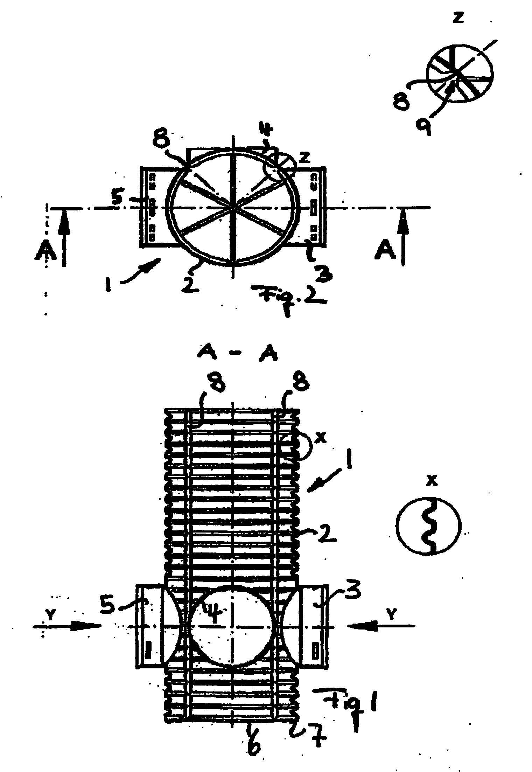

Wie Figur 1 zeigt, ist das Schachtrohr 1 als einwandiges Wellrohr ausgebildet, dessen Wandung 2 abwechselnd nach innen und außen ausgebauchte Umfangsrillen besitzt. Im Längsschnitt ergibt sich damit eine mäanderförmige Kontur der Wandung (vgl. Ausschnitt X aus Fig. 1).

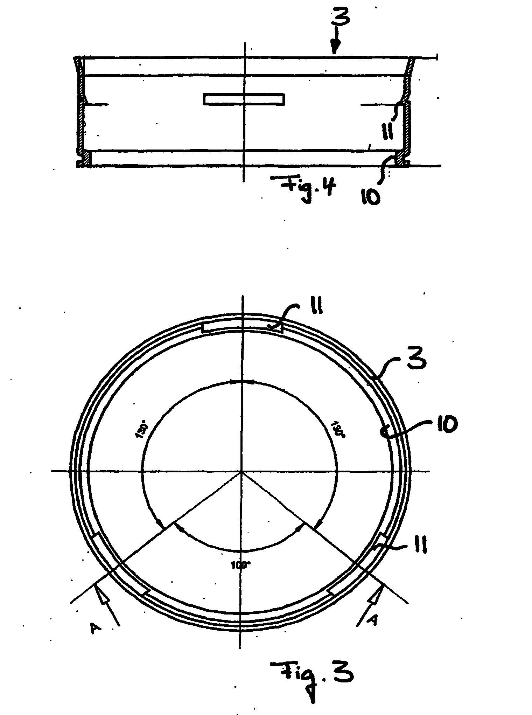

Im unteren Drittel des Schachtrohres 1 sind an dieses drei Anschlussstutzen 3, 4 und 5 angeformt, die in einer gemeinsamen Ebene liegen und senkrecht durch die Wandung 2 des Schachtrohrs 1 hindurchtreten. Wie Figur 2 zeigt, sind zwei der Anschlussstutzen 3 und 5 diametral gegenüberliegend angeordnet. Ihre Längsachsen sind zueinander koaxial. Der dritte Anschlussstutzen 4 ist symmetrisch zwischen den beiden gegenüberliegenden Anschlussstutzen 3 und 5 angeordnet, er ist zu jedem der beiden anderen Anschlussstutzen 3 und 5 um jeweils 90 Grad versetzt.

Das Schachtrohr 1 besteht aus Kunststoff, vorzugsweise aus Polyethylen oder Polypropylen. Es wird im Blasverfahren hergestellt. Die nicht näher dargestellte Vorrichtung zur Herstellung des Schachtrohres ist eine aus zwei Hälften bestehende Blasform. Die Trennebene der Blasform entspricht der in Figur 2 gezeigten Schnittebene A-A, d. h. sie ist durch die Längsachse des Schachtrohres 1 und die koaxiale Längsachse der gegenüberliegenden Anschlussstutzen 3 und 5 bestimmt. Bei dem Blasverfahren werden die Anschlussstutzen 3 und 5 in einem Verfahrensprozess mit dem Schachtrohr 1 hergestellt. Gleichzeitig wird der Boden 6 des Schachtrohres 1 beim Blasen mit angeformt. Wie Figur 1 zeigt, besitzt der Boden 6 einen wulstartig nach unten hin vorspringenden Aufstandsring 7, gegenüber dem die zentrale Fläche des Bodens 6 leicht nach oben zurückgesetzt ist, so dass der Dränschacht auch bei unebenem Boden wackelfrei aufstehen kann.

Der dritte Anschlussstutzen 4 kann beim Blasvorgang zunächst nur als kurzer Stutzenstummel bzw. Anschlusswarze angeformt werden. Der eigentliche Anschlussstutzen 4 wird nach dem Blasvorgang mittels Ultraschweißverfahren mit dem Schachtrohr 1 verbunden.

Der integral einstückig im Blasverfahren angeformte Boden 6 gibt dem Schachtrohr 1 große Verformungssteifigkeit. Zudem kann der Boden 6 in einfacher Weise wasserdicht ausgebildet sein.

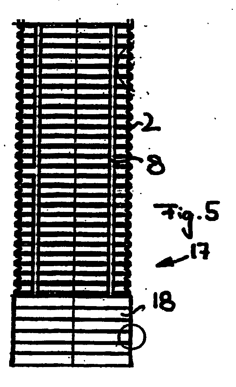

Zur weiteren Versteifung des Schachtrohres sind drei Längsversteifungsrippen 8 vorgesehen, die einstückig an die Wandung 2 des Schachtrohrs 1 angeformt sind. Wie Figuren 1 und 3 zeigen, sind die Längsversteifungsrippen 8 symmetrisch über den Umfang verteilt und erstrecken sich durchgehend über die gesamte Länge des Schachtrohres 1. Sie bilden eine Sicke in dem gewellten Profil der Wandung 2. Wie der Ausschnitt Z aus Figur 2 zeigt, tritt die Längssicke 9 durch die radial nach innen auswölbenden Rillen des Wellrohrprofiles hindurch. Die Tiefe der Sicke ist größer als die halbe Höhe des Wellrohrprofils, sie ist jedoch kleiner als die gesamte Höhe des Wellrohrprofils. Hierdurch bleibt auch im Bereich der Längssicken ein Teil des Umfangsrillenprofils erhalten, so dass die Längsversteifungen in Umfangsrichtung dem Rohr nicht zuviel seiner Steifigkeit nehmen.

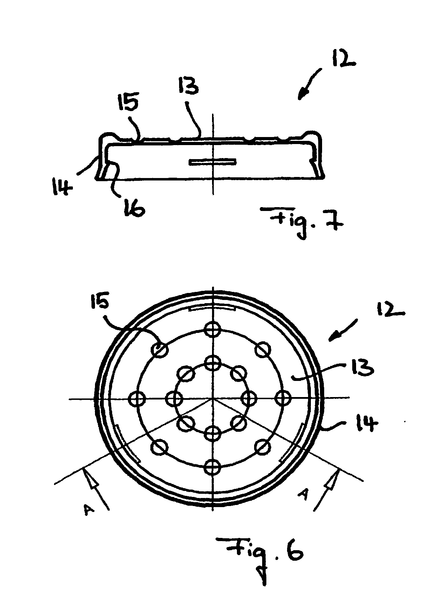

Die Ausbildung der Anschlussstutzen ist in den Figuren 3 und 4 näher dargestellt. Der im Querschnitt kreisförmige Anschlussstutzen 3 ist einwandig ausgebildet. Seine Längserstreckung kann verschieden bemessen sein, ist jedoch auf alle Fälle ausreichend groß, um ein sicheres Einstecken des anzuschließenden Rohres bzw. des Adapters zu gewährleisten. Typischerweise kann die axiale Länge, die vom Durchmesser abhängen kann, mindestens 50, vorzugsweise etwa 70 mm betragen.

Der im Blasverfahren angeformte Anschlussstutzen ist so ausgebildet, dass das anzuschließende Rohr in das Innere des Anschlussstutzens eingesteckt wird. An seinem dem Innenraum des Schachtrohres 1 zugewandten Ende besitzt der Anschlussstutzen 3 einen Stecktiefenbegrenzer 10, der als nach innen hin vorspringender Absatz ausgebildet ist. Um den als Stecktiefenbegrenzer 10 fungierenden Absatz beim Blasen auszubilden, kann der Anschlussstutzen im Bereich des Stecktiefenbegrenzers 10 an seinem Außenumfang eine ringförmig umlaufende Nut besitzen. Die Stecktiefenbegrenzung kann auch nur segmentweise ausgebildet sein, so dass nur segmentförmige Umfangsnuten von außen her vorgesehen und dementsprechend innen nur segmentförmige Absätze vorspringen.

Ferner besitzt der Anschlussstutzen 3 nach innen hin vorspringende Rastnasen, und zwar drei Stück an der Zahl, die über den Umfang verteilt sind (vgl. Figur 3). Die Rastnasen 11 definieren einen größeren Durchmesser als die bzw. der Stecktiefenbegrenzer 10. Sie sind voneinander ausreichend in axialer Richtung beabstandet, so dass ein einzusteckendes Rohr bzw. der Anschlussadapter zunächst über die Rastnasen 11 hinweggeschoben werden kann und dann gegen den Stecktiefenbegrenzer 10 ansteht.

Sowohl Stecktiefenbegrenzer 10 wie Rastnasen 11 sind einstückig beim Blasen des Schachtrohres und der Anschlussstutzen mit angeformt. Der Anschlussstutzen 3 ist frei von Durchbrüchen und dergleichen, auch im Bereich der Rastnasen 11 und des Stecktiefenbegrenzers 10.

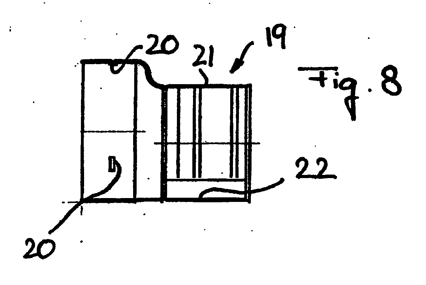

Auf das obere Ende des Schachtrohres 1 kann ein Schachtdeckel 12 aufgerastet werden, der in den Figuren 6 und 7 gezeigt ist. Der Schachtdeckel 12 besteht ebenfalls aus Kunststoff, vorzugsweise Polyethylen oder Polypropylen und ist im Blasverfahren hergestellt. Wie Figur 7 zeigt, ist der Schachtdeckel 12 insgesamt napfförmig mit einer plattenförmigen Deckelfläche 13 und einem ringförmig umlaufenden Rand 14 versehen. Der Schachtdeckel 12 ist insgesamt doppelwandig ausgebildet. Im Bereich der Deckelfläche 13 sind eine Vielzahl von Schweißpunkten 15 vorgesehen, die die beiden Wandungen des Schachtdeckels miteinander verbinden und hierdurch dem Deckel eine wesentlich größere Steifigkeit und Belastbarkeit geben. Von den Schweißpunkten 15 abgesehen können die beiden Wandungen des Schachtdeckels 12 leicht voneinander beabstandet sein.

An der Innenwandung im Bereich des Randes 14 sind nach innen vorspringende Rastnasen an dem Schachtdeckel 12 vorgesehen. Die Rastnasen 16 sind derart ausgebildet, dass sie mit dem gewählten Außenprofil des Schachtrohrs 1 zusammenwirken und darauf verrastbar sind. Wie Figur 6 zeigt, sind drei symmetrisch über den Umfang verteilte Rastnasen 16 am Schachtdeckel 12 vorgesehen.

Um die Tiefe des Schachtes gegebenenfalls vergrößern zu können, kann ein Aufsatzrohr 17 auf das Schachtrohr 1 aufgesteckt werden. Das in Figur 5 gezeigte Aufsatzrohr 17 besitzt an seinem unteren Ende einen Steckmuffenbereich 18, mit dem es passgenau auf das Wellrohrprofil des Schachtrohrs 1 aufgesteckt werden kann. Im übrigen ist auch das Aufsatzrohr 17 als Wellrohr mit drei Längsversteifungsrippen ausgebildet. Das Profil sowie die Versteifungen entsprechen dem des Schachtrohres 1, so dass auf dessen Beschreibung verwiesen wird. Ebenso wie das Schachtrohr 1 ist das Aufsetzrohr 17 aus Kunststoff im Blasverfahren hergestellt.

Um die Anschlussstutzen 3, 4 und 5 an verschiedene Rohrdurchmesser anpassen zu können, ist vorzugsweise ein Anschlussadapter 19 vorgesehen, der in Figur 8 gezeigt ist. Der Anschlussadapter 19 entspricht mit seinem Außendurchmesser dem Innendurchmesser des jeweiligen Anschlussstutzens des Schachtohrs 1. Am Außenumfang sind hinterschnittene Rastausnehmungen 20 vorgesehen, die derart angeordnet sind, dass sie mit den Rastnasen 11 des Anschlussstutzens zusammenwirken können. Sie sind axial vom einzusteckenden Ende des Anschlussadapters 19 insbesondere genau soweit entfernt , dass die Rastnasen des Anschlussadapters genau dann einrasten, wenn die Stirnseite des Anschlussadapters am Stecktiefenbegrenzer des Anschlussstutzens ansteht.

In axialer Richtung nach außen hin verjüngt sich der Anschlussadapter 19 auf einen reduzierten Durchmesserbereich 21, der seinerseits eine Einstecköffnung für das anzuschließende Entwässerungsrohr bildet. Wie Figur 8 zeigt, sind die Längsachsen der Durchmesserabschnitte des Anschlussadapters 19 zueinander versetzt, und zwar derart, dass der Sohlenbereich, also das untenliegende Segment des Anschlussadapters 19 insgesamt stufenfrei ausgebildet ist (vgl. Figur 8).

Ohne das dies eigens gezeigt wäre, könnte der Anschlussadapter 19 noch weitere, im Durchmesser stufenweise jeweils weiter zurückgenommene Anschlussabschnitte besitzen. Die jeweils zu kleinen Anschlussabschnitte können dann abgetrennt werden, um genau den passenden Anschlussabschnitt für den jeweiligen Rohrdurchmesser auszuwählen. Hierdurch kann mit einem einzigen Werkzeug ein Anschlussadapter für verschiedene Rohrdurchmesser geschaffen werden. Vorzugsweise ist auch der Anschlussadapter 19 im Extrusionsblasverfahren aus Kunststoff hergestellt.

## Patentansprüche

1. Dränschacht mit einem als Wellrohr ausgebildeten Schachtrohr (1) aus Kunststoff, einem das Schachtrohr (1) verschliessenden Boden (6), sowie zumindest zwei radial am Schachtrohr (1) vorgesehenen Anschlussstutzen (3,5), an denen jeweils eine Entwässerungsleitung oder dergleichen anschliessbar ist, wobei
der Boden (6) sowie die Anschlussstutzen (3, 5) schweissnahtfrei an dem Schachtrohr (1) einstückig angeformt sind, **dadurch gekennzeichnet,**
**dass** das Schachtrohr (1) über seinen Umfang verteilt einstückig angeformte Längsversteifungsrippen (8) aufweist, wobei die Längsversteitungsrippen (8) die Umfangsrillen des Wellrohres durchsetzende Sicken (9) bilden.

2. Dränschacht gemäß Anspruch 1, **dadurch gekennzeichnet, dass** die Längsversteifungsrippen (8) die Umfangsrillen des Wellrohrs durchsetzende Sicken (9) bilden, welche auf der Innenumfangsseite des Wellrohrs in von Anschlussstutzen (3, 4, 5) freien Segmenten angeordnet sind.

3. Dränschacht gemäß Anspruch 1 oder 2, **dadurch gekennzeichnet, dass** ein Paar diametral gegenüberliegende Anschlussstutzen (3, 5) am Schachtrohr (1) angeblasen sind.

4. Dränschacht gemäß einem der vorhergehenden Ansprüche, **dadurch gekennzeichnet, dass** die Anschlussstutzen (3, 4, 5) jeweils frei von Durchbrüchen mit radial vorspringenden, einstückig angeformten Arretiervorsprüngen (16) versehen sind.

5. Dränschacht gemäß einem der vorhergehenden Ansprüche, **dadurch gekennzeichnet, dass** die Anschlussstutzen (3, 4, 5) frei von Durchbrüchen mit radial vorspringenden, einstückig angeformten Stecktiefenbegrenzern (10) versehen sind.

6. Dränschacht gemäß einem der vorhergehenden Ansprüche, wobei zumindest ein dritter Anschlussstutzen (4) vorgesehen ist.

7. Dränschacht gemäß einem der vorhergehenden Ansprüche, **dadurch gekennzeichnet, dass** das Schachtrohr (1) einschliesslich des Bodens (6) und der Anschlussstutzen (3, 5) einstückig extrusionsgeblasen ist.

8. Dränschacht gemäß einem der vorhergehenden Ansprüche, **dadurch gekennzeichnet, dass** der Boden (6) einen ringförmigen Aufstandsbereich (7) und einen gegenüber dem Aufstandsbereich zur Schachtrohrinnenseite hin zurückgenommenen Zentralbereich aufweist.

9. Dränschacht gemäß einem der vorhergehenden Ansprüche, **dadurch gekennzeichnet, dass** ein in den Anschlussstutzen (3, 4, 5) einsteckbarer Anschlussadapter (19) vorgesehen ist, der im Durchmesser abgestufte Anschlussabschnitte und einen über die Anschlussabschnitte hinweggehend stufenfreien Sohlenbereich (22) besitzt, wobei vorzugsweise zwischen den Anschlussabschnitten Soll-Trennstellen vorgesehen sind.

10. Dränschacht gemäß einem der vorhergehenden Ansprüche, **dadurch gekennzeichnet, dass** die Anschlussstutzen und/oder der Anschlussadapter eine Steckcodierung besitzt, die ein Zusammenstecken von Anschlussstutzen und Anschlussadapter in nur einer einzigen Drehlage erlaubt.

11. Dränschacht gemäß einem der vorhergehenden Ansprüche, **dadurch gekennzeichnet, dass** ein napfförmiger Schachtdeckel (12) aus Kunststoff vorgesehen ist, der doppelwandig extrusionsgeblasen und zwischen seinen Doppelwandungen punktgeschweisst ist.

12. Dränschacht gemäß einem der vorhergehenden Ansprüche, **dadurch gekennzeichnet, dass** der Schachtdeckel (12) mit dem Schachtrohr (1) verrastbar ist, insbesondere frei von Durchbrüchen radial nach innen vorspringende Rastnasen (16) besitzt, die einstückig am Deckel angeformt über den Umfang verteilt und mit den Umfangsseiten des Wellrohrs verrastbar sind.

## Claims

1. Drain shaft with a plastic shaft pipe (1) formed as a corrugated pipe, a bottom (6) closing the shaft pipe (1), as well as at least two connecting pieces (3, 5) which are provided at the shaft pipe (1) and to which a draining conduit or the like is connectable, respectively, whereby
the bottom (6) as well as the connecting pieces (3, 5) are formed in a single piece to the shaft pipe (1) without weld, **characterized in that**, the shaft pipe (1) exhibits distributed along its circumference longitudinal reinforcement rips (8) formed thereto in single piece, whereby the longitudinal reinforcement rips (8) form beads (9) penetrating the circumferential grooves of the corrugated pipe.

2. Drain shaft according to claim 1, **characterized in that**, the longitudinal reinforcement rips (8) form the beads (9) which are penetrating the circumferential grooves of the corrugated pipe and which are arranged on the inner circumferential side of the corrugated pipe in the segments free of connecting pieces (3, 4, 5).

3. Drain shaft according to claim 1 or 2, **characterized in that**, a pair of diametrical opposing connecting pieces (3, 5) are blown to the shaft pipe (1).

4. Drain shaft according to one of the previous claims, **characterized in that**, the connecting pieces (3, 4, 5) free of break throughs are respectively provided with radially projecting single piece formed onto locking projections (16).

5. Drain shaft according to one of the previous claims, **characterized in that**, the connecting pieces (3, 4, 5) free of break throughs are provided with radially projecting single piece formed onto plug-in depth limiters (10).

6. Drain shaft according to one of the previous claims, whereby at least a third connecting piece (4) is provided.

7. Drain shaft according to one of the previous claims, **characterized in that**, the shaft pipe (1) including the bottom (6) and the connecting pieces (3, 5) are single piece extrusion blown.

8. Drain shaft according to one of the previous claims, **characterized in that**, the bottom (6) exhibits a annular contact region (7) and a central region recessed towards the inside of the shaft pipe with respect to the contact region.

9. Drain shaft according to one of the previous claims, **characterized in that**, in one of the connecting pieces (3, 4, 5) a plug-in connecting adapter (19) is provided which has connecting segments stepped in diameter and a step free base area (22) running over the connecting segments, whereby target separation points are preferably provided between the connecting segments.

10. Drain shaft according to one of the previous claims, **characterized in that**, the connecting pieces and/or the connecting adapters have a plug-in coding which allows plugging together of the connecting pieces and the connecting adapter only in a single position of rotation.

11. Drain shaft according to one of the previous claims, **characterized in that**, a cup like shaft cover (12) of plastic is provided which is double-walled extrusion blown and point welded between its double-walls.

12. Drain shaft according to one of the previous claims, **characterized in that**, the shaft cover (12) is lockable with the shaft pipe (1), especially has free of break throughs radially inwards projecting locking noses (16) which are distributed along the circumference formed thereto in single piece and which are lockable with the circumferential side of the corrugated pipe.

## Revendications

1. Puits de drainage comprenant un tube de puits (1) conformé en tube ondulé en matière synthétique, un fond (6) fermant le tube de puits (1) ainsi qu'au moins deux raccords (3, 5) qui sont prévus radialement sur le tube de puits (1) et sur chacun desquels peut être raccordée une conduite d'évacuation ou analogue, le fond (6) ainsi que les raccords (3, 5) étant surmoulés d'un seul tenant sans soudure sur le tube de puits (1), **caractérisé en ce que** le tube de puits (1) comporte des nervures de renfort longitudinal (8) surmoulées d'un seul tenant et réparties sur sa circonférence, les nervures de renfort longitudinal (8) formant des moulures (9) qui traversent les rainures périphériques du tube ondulé.

2. Puits de drainage selon la revendication 1, **caractérisé en ce que** les nervures de renfort longitudinal (8) forment des moulures (9) qui traversent les rainures périphériques du tube ondulé et qui sont disposées sur le côté périphérique intérieur du tube ondulé dans des segments dépourvus de raccords (3, 4, 5).

3. Puits de drainage selon la revendication 1 ou 2, **caractérisé en ce qu'**une paire de raccords diamétralement opposés (3, 5) est formée par soufflage sur le tube de puits (1).

4. Puits de drainage selon une des revendications précédentes, **caractérisé en ce que** chacun des raccords (3, 4, 5) est pourvu, en l'absence de perforations, de saillies d'arrêt (16) surmoulées d'un seul tenant en saillie radiale.

5. Puits de drainage selon une des revendications précédentes, **caractérisé en ce que** les raccords (3, 4, 5) sont pourvus, en l'absence de perforations, de limiteurs de profondeur d'enfoncement (10) qui font saillie radialement et sont surmoulés d'un seul tenant.

6. Puits de drainage selon une des revendications précédentes, les raccords (4) prévus étant au moins au nombre de trois.

7. Puits de drainage selon une des revendications précédentes, **caractérisé en ce que** le tube de puits (1), fond (6) et raccords (3, 5) compris, est extrudé-soufflé d'un seul tenant.

8. Puits de drainage selon une des revendications précédentes, **caractérisé en ce que** le fond (6) comporte une zone annulaire de contact au sol (7) et une zone centrale située en retrait vers le côté intérieur du tube de puits par rapport à la zone de contact au sol.

9. Puits de drainage selon une des revendications précédentes, **caractérisé en ce qu'**il est prévu un adaptateur de raccord (19) qui est emboîtable sur les raccords (3, 4, 5) et qui possède des portions de raccord à diamètres étagés et une zone de semelle (22) qui s'étend sans décrochement au-delà des portions de raccord, des emplacements de séparation imposée étant de préférence prévus entre les portions de raccord.

10. Puits de drainage selon une des revendications précédentes, **caractérisé en ce que** les raccords et/ou l'adaptateur de raccord possèdent un moyen de détrompage qui n'autorise l'emboîtement mutuel d'un raccord et d'un adaptateur de raccord que dans une seule position de rotation.

11. Puits de drainage selon une des revendications précédentes, **caractérisé en ce qu'**il est prévu un couvercle de puits en forme de coupelle (12) en matière synthétique, lequel est extrudé-soufflé avec deux parois et est soudé par points entre ses deux parois.

12. Puits de drainage selon une des revendications précédentes, **caractérisé en ce que** le couvercle de puits (12) peut être relié au tube de puits (1) par crantage et, en l'absence de perforations, possède en particulier des talons de crantage (16) qui font saillie radialement vers l'intérieur et qui sont répartis sur la périphérie en étant surmoulés d'un seul tenant avec le couvercle et peuvent être reliés par crantage aux côtés périphériques du tube ondulé.
